# EUROPEAN PATENT APPLICATION

(11) **EP 4 366 031 A1**
(43) Date of publication of application: **08.05.2024**
(21) Application number: 23201497.7
(22) Date of filing: 03.10.2023
(51) Int. Cl.: H01M 10/48, H01M 50/383, H01M 10/613, H01M 10/42

(54) **SYSTEM AND METHOD FOR EARLY-STAGE DETECTION OF THERMAL RUNAWAY IN LITHIUM-ION BATTERIES**

(30) Priority: 07.11.2022 IN 202211063512
(71) Applicant: Honeywell International Inc., Charlotte, NC 28202 (US)
(72) Inventor: KUMAR, Nirmal, Charlotte, 28202 (US); RAO, Sharath, Charlotte, 28202 (US)
(74) Representative: Haseltine Lake Kempner LLP

(57) **Abstract**

A thermally reactive capsule coupled to a battery cell, the thermally reactive capsule comprising a capsule shell comprising a thermally conductive material that transfers heat from a surface of the battery cell to the capsule shell, a volatile organic compound ("VOC") stored within a cavity of the capsule shell, wherein the VOC is in a liquid state and at a temperature below boiling point of the VOC, and the boiling point of the VOC is below a threshold temperature. The thermally reactive capsule further comprising one or more pressure relief devices configured on a surface of the capsule shell, wherein pressure generated by vaporization of the VOC causes opening of the one or more pressure relief devices.

## Description

### FIELD OF THE INVENTION

Example embodiments of the present disclosure relate generally to detecting abnormal battery conditions, and in particular, providing an early indicator of thermal runaway.

### BACKGROUND

Thermal runaway is one of the primary risks related to using lithium-ion batteries in electrical vehicles. Thermal runaway may be triggered by mishandling or management of a lithium-ion battery unit via, for example, electrical abuse, mechanical abuse, thermal abuse, water ingress, or manufacturing defect of the battery. Electrical abuse may comprise improper charging/discharging, or a short circuit of a battery unit. Mechanical abuse may comprise impact or physical damage to a battery unit. Thermal abuse may comprise over heating of a battery unit. Water ingress may comprise a presence of water in a battery unit. Manufacturing defect may comprise an improperly manufactured battery unit that is unsuitable for the purpose for which it was designed. As such, thermal runaway may occur as a result of such mishandling or management.

Thermal runaway may comprise a condition where a battery cell experiences an increase in temperature such that when the temperature reaches a particular threshold, the battery cell may cause a chain reaction with neighboring battery cells that result in smoke, fire, or explosion. A gas detection sensor may be used to detect potential thermal runaway by detecting gas vented from a battery unit or cell. However, Applicant has identified that when a battery cell has reached a point where it vents gas, the battery cell may have already suffered irreversible damage, rendering gas detection ineffective in detecting early-stage thermal runaway.

### BRIEF SUMMARY

Various embodiments described herein relate to components, apparatuses, and systems for detecting thermal runaway in batteries.

In accordance with various embodiments of the present disclosure, a thermally reactive capsule coupled to a battery cell is provided. In some embodiments, the thermally reactive capsule comprises a capsule shell comprising a thermally conductive material that transfers heat from a surface of a battery cell to the capsule shell, a volatile organic compound ("VOC") stored within a cavity of the capsule shell, wherein the VOC is in a liquid state and at a temperature below boiling point of the VOC, and the boiling point of the VOC is below a threshold temperature. The thermally reactive capsule further comprising one or more pressure relief devices configured on a surface of the capsule shell, wherein pressure generated by vaporization of the VOC causes opening of the one or more pressure relief devices.

In some embodiments, the vaporization of the VOC comprises a conversion of the VOC from liquid state to gas state. In some embodiments, the vaporization is caused by a transfer of heat from the surface of the battery cell to the capsule shell, wherein the heat causes the VOC to reach or exceed the boiling point of the VOC. In some embodiments, the capsule shell is adhered to the surface of the battery cell with thermally conductive adhesive. In some embodiments, the VOC comprises a compound associated with battery off-gassing. In some embodiments, the VOC comprises a compound selected from the group consisting of diethyl carbonate, ethyl acetate, methyl acetate, 1,2-dimethoxyethane, tetrahydrofuran, 2-methyl-tetrahydrofuran, 1,3-dioxolane, 4-methyl 1,3-dioxolane, 2-methyl 1,3-dioxolane, and acetonitrile. In some embodiments, the boiling point of the VOC is within a range of approximately 50°C to 100°C. In some embodiments, opening of the one or more pressure relief devices comprises releasing of VOC gas associated with the vaporization of the VOC. In some embodiments, the threshold temperature comprises a temperature below a temperature associated with a risk of damage to the battery cell.

According to another embodiment, a system for detecting thermal runaway in batteries is provided. The system comprises one or more thermally reactive capsules coupled to one or more battery cells. Each of the one or more thermally reactive capsules comprising a capsule shell comprising a thermally conductive material that transfers heat from a surface of a selected one of the one or more battery cells to the capsule shell, a volatile organic compound ("VOC") stored within a cavity of the capsule shell, wherein the VOC is in a liquid state and at a temperature below boiling point of the VOC, and the boiling point of the VOC is below a threshold temperature, and one or more pressure relief devices configured on a surface of the capsule shell, wherein pressure generated by vaporization of the VOC causes opening of the one or more pressure relief devices. The system further comprises a gas sensor configured to detect the vaporization of the VOC.

In some embodiments, the vaporization of the VOC comprises a conversion of the VOC from liquid state to gas state. In some embodiments, the vaporization is caused by a transfer of heat from the surface of the battery cell to the capsule shell, wherein the heat causes the VOC to reach or exceed the boiling point of the VOC. In some embodiments, the VOC comprises a compound associated with battery off-gassing. In some embodiments, the boiling point of the VOC is within a range of approximately 50°C to 100°C. In some embodiments, opening of the one or more pressure relief devices comprises releasing of VOC gas associated with the vaporization of the VOC. In some embodiments, the threshold temperature comprises a temperature below a temperature associated with a risk of damage to the battery cell.

According to another embodiment, a system is provided that comprises one or more thermally reactive capsules coupled to one or more battery cells of a battery pack, each of the one or more thermally reactive capsules comprising a capsule shell comprising a thermally conductive material that transfers heat from a surface of a selected one of the one or more battery cells to the capsule shell, a volatile organic compound ("VOC") stored within a cavity of the capsule shell, wherein the VOC is in a liquid state and at a temperature below boiling point of the VOC, and the boiling point of the VOC is below a threshold temperature, and one or more pressure relief devices configured on a surface of the capsule shell, wherein pressure generated by vaporization of the VOC causes opening of the one or more pressure relief devices. The system further comprises a gas sensor coupled to a battery management system, wherein the gas sensor is configured to detect VOC gas from the vaporization of the VOC, and transmit a data signal to the battery management system, the data signal representative of the detection of the VOC gas.

In some embodiments, the battery management system is configured to determine thermal runaway based on the data signal. In some embodiments, the battery management system is configured to communicate with a charge controller to manage charging parameters of the battery pack based on the data signal. In some embodiments, the vaporization is caused by a transfer of heat from the surface of the battery cell to the capsule shell, wherein the heat causes the VOC to reach or exceed the boiling point of the VOC.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1A and FIG. 1B illustrate an exemplary thermally reactive capsule in accordance with some example embodiments described herein.
FIG. 2 illustrates an exemplary thermal runaway temperature curve.
FIG. 3 illustrates an exemplary battery pack for implementing various embodiments of the present disclosure.
FIG. 4 illustrates an exemplary system for thermal runaway detection in accordance with various embodiments of the present disclosure.
FIG. 5 illustrates an exemplary battery system incorporating thermal runaway detection in accordance with various embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

As described above, there are many technical challenges and difficulties associated with thermal runaway detection for batteries. In particular, conventional methods for detecting thermal runaway, such as the use of gas sensors are not designed to detect early stages of thermal runaway prior to battery off-gassing. That is, gas sensors can only detect thermal runaway once cell damage has occurred. Thus, there is a need to overcome such challenges and difficulties in early-stage thermal runaway detection for batteries.

According to various embodiments of the present disclosure, a thermally reactive capsule containing a volatile organic compound ("VOC") may be coupled to one or more cells in a battery unit to provide or enhance thermal runaway detection.

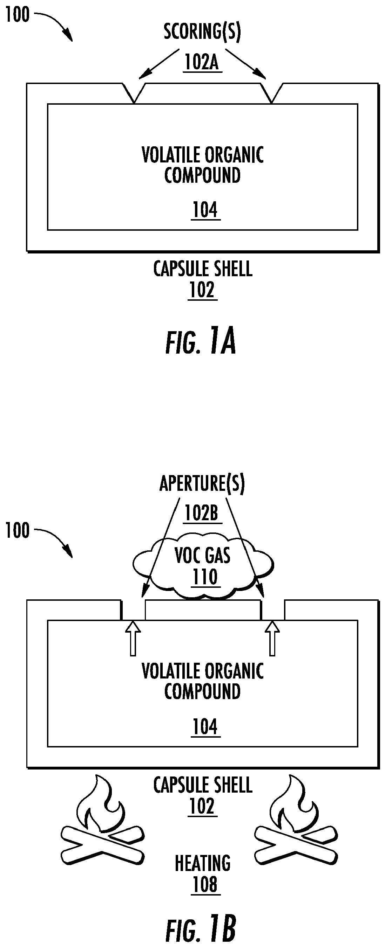

FIG. 1A presents an exemplary thermally reactive capsule according to an embodiment of the present disclosure. Thermally reactive capsule 100 comprises a capsule shell 102 and VOC 104 stored within a cavity formed within capsule shell 102. The capsule shell 102 may comprise a thermally conductive material, such as metal, metal alloys, chemical elements, minerals, synthetic materials, polymers, or any other material possessing the ability to readily receive or transfer heat. Examples of thermally conductive material suitable for capsule shell 102 may include aluminum, copper, silver, gold, graphite, zinc, steel, or plastic. The thermally conductive material of capsule shell 102 may allow for conductive heat transfer from a material or object that is in direct contact with capsule shell 102. Capsule 100 may comprise any shape and size suitable for placement on a battery cell within a battery unit.

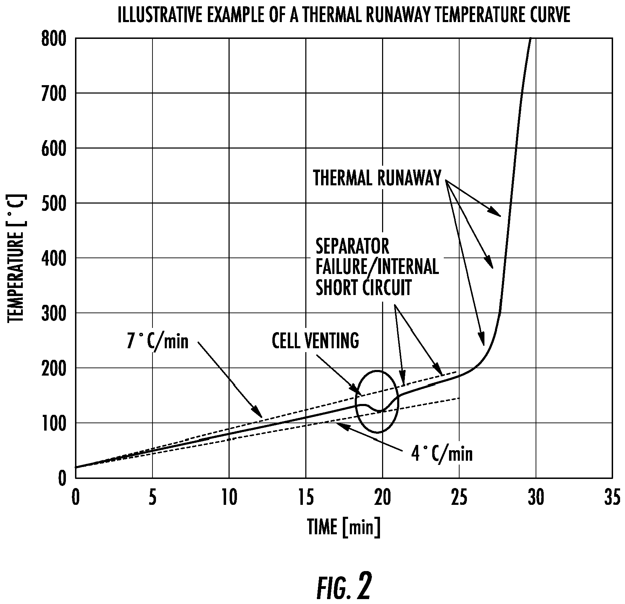

VOC 104 may be stored within capsule shell 102 in a liquid state, that is, at a temperature below the VOC 104 boiling point. The VOC 104 may comprise a chemical that is in a liquid state when its temperature is below its boiling point and becomes a gas when its temperature reaches or exceed its boiling point. VOC 104 may comprise a compound associated with battery off-gassing, such as solvents for lithium-ion battery electrolytes. The boiling point of VOC 104 may be, for example, within a range of approximately 50°C to 100°C. According to various embodiments of the present disclosure, VOC 104 may comprise a compound that is selected with a boiling point corresponding to a range of temperatures below a threshold temperature. The threshold temperature may comprise a temperature below temperatures that would cause damage to a battery cell, such as battery cell venting temperature, as depicted on a thermal runaway temperature curve in FIG. 2. Examples of VOC 104 may include, but not limited to, diethyl carbonate, ethyl acetate, methyl acetate, 1,2-dimethoxyethane, tetrahydrofuran, 2-methyl-tetrahydrofuran, 1,3-dioxolane, 4-methyl 1,3-dioxolane, 2-methyl 1,3-dioxolane, and acetonitrile.

The capsule shell 102 further comprises one or more scoring(s) 102A on a surface of capsule shell 102. The one or more scoring(s) 102A may comprise a pressure relief device capable of releasing internal pressure contained within capsule shell 102 exceeding a given amount. The one or more scoring(s) 102A may remain intact provided that the temperature of VOC 104 is under its boiling point. The one or more scoring(s) 102A may be opened at the one or more scoring(s) 102A upon internal pressure of capsule shell 102 exceeding a certain amount pressure generated by vaporization of VOC 104 caused by temperature of VOC 104 reaching its boiling point.

According to one or more alternative embodiments, one or more scoring(s) 102A may be omitted from capsule shell 102. For example, capsule shell 102 may be constructed such that internal pressure created by vaporization of VOC 104 would be sufficient to open any portion of a surface of capsule shell 102 without one or more scoring(s) 102A. In another embodiment, capsule shell 102 may comprise one or more thinned wall portions in place of one or more scoring(s) 102A. In yet another embodiment, capsule shell 102 may comprise an apparatus comprising a mechanical pressure switch that can be triggered by pressure to turn an electrical circuit on or off.

One or more of capsule 100 may be adhered directly to a surface of one or more battery cells of a battery unit for detection of thermal runaway. Thermal runaway may occur when the temperature inside a battery cell reaches a point that causes a chemical reaction to occur inside the battery cell, which in turn, may produce even more heat driving the temperature of the battery cell even higher such that the temperature may eventually rise at an exponential rate, further leading to a chain reaction of spreading heat to other battery cells. As such, to detect increases in battery cell temperature at early stages of thermal runaway, capsule shell 102 may be adhered (e.g., via thermally conductive adhesive) to a surface of a battery cell.

FIG. 1B presents an exemplary thermally reactive capsule exposed to heating according to an embodiment of the present disclosure. Capsule 100 may be adhered to a surface of a source of heating 108. Heating 108 may comprise an emission of conductive heat, e.g., from a surface of a battery cell. The heating 108 may be transferred to capsule shell 102.

In one embodiment, capsule 100 may react to heating 108 by releasing VOC gas 110 as a result of heating 108 causing vaporization of VOC 104. In particular, heating 108 may be transferred to capsule shell 102 and may cause the temperature of VOC 104 to reach its boiling point. Upon the temperature of VOC 104 reaching its boiling point, the VOC 104 may transition from a liquid state to a gas state (VOC gas 110), e.g., via vaporization, which may cause an increase in pressure within capsule shell 102. The increase in pressure may reach or exceed a limit of the one or more scoring(s) 102A, causing the one or more scoring(s) 102A to open. One or more aperture(s) 102B may be formed from opening of one or more scoring(s) 102A, and thus releasing VOC gas 110 from capsule 100. VOC gas 110 released through the one or more aperture(s) 102B may be detected by a gas sensor, thus, serving as an early-stage warning indicator of thermal runaway. Capsule 100 may be depleted of VOC 104 once the one or more scoring(s) 102A are opened and become one or more aperture(s) 102B. In the case that VOC 104 is depleted from capsule 100, capsule 100 may no longer be of further use and may be replaced with another one of capsule 100 with unopened one or more scoring(s).102A.

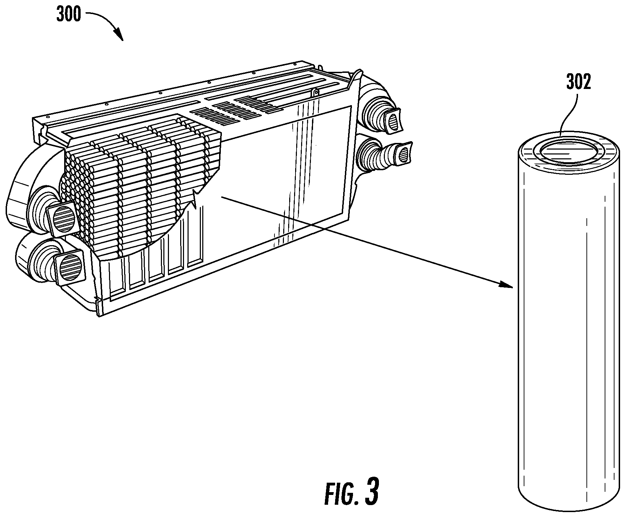

FIG. 3 depicts an exemplary battery pack. Battery pack 300 comprises a plurality of battery cells 302. The battery cells 302 may be configured in series, parallel, or a combination thereof to deliver a desired voltage, capacity, or power density. For example, the battery pack 300 may comprise an electric vehicle battery pack. In at least one embodiment, battery cells 302 may comprise lithium-ion cells. According to various embodiments of the present disclosure, capsule 100 may be adhered to one or more of battery cells 302 or to the battery pack 300. According to an alternative embodiment, a VOC may be directly embedded within the housing of the battery cells 302 or battery pack 300.

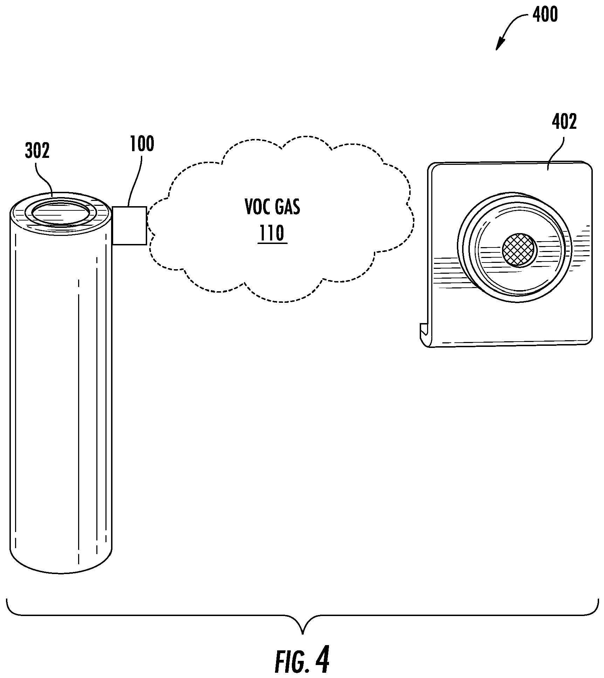

FIG. 4 presents an exemplary system for thermal runaway detection according to an embodiment of the present disclosure. A system 400 comprises battery cell 302, capsule 100, and gas sensor 402. According to various embodiments of the present disclosure, capsule 100 may be adhered (e.g., using thermally conductive adhesive) or configured directly in contact with a surface of battery cell 302 such that thermal energy may be conducted from the surface of the battery cell 302 to capsule 100. As discussed above, capsule 100 may comprise a capsule shell 102 and VOC 104 stored within a cavity formed by capsule shell 102.

Capsule 100 may be used as an indicator of excessive heat generated by battery cell 302 that is beyond a predetermined temperature that causes the capsule 100 to release VOC gas 110. For example, the predetermined temperature may be below a temperature associated with a risk of damage to the battery cell 302, such as a temperature when battery cell venting starts to occur. Accordingly, battery cell 302 may generate heat to sufficiently heat VOC 104 within capsule 100 to cause vaporization of VOC 104 at the predetermined temperature. Vaporization of VOC 104 may occur once boiling point of VOC 104 is reached. The vaporization of VOC 104 may cause an accumulation of internal pressure in the capsule 100. As such, the increased internal pressure may cause rapturing of capsule 100, e.g., via one or more scoring(s) 102A, releasing VOC gas 110. The VOC gas 110 may be detected by gas sensor 402. Gas sensor 402 may comprise a sensor capable of detecting battery off-gassing, such as VOC gas 110.

Accordingly, system 400 may provide detection of early-stage symptoms of thermal runaway by detecting a release of VOC gas 110 from capsule 100 rather than off-gassing from the battery cell 302 itself. The presently disclosed system is thus capable of providing an earlier indication of thermal runaway such that permanent damage to battery cell 302 can be avoided. The capsule 100 may be applied to battery cells to provide early warnings of battery cell issues such that immediate servicing of a battery unit system may be undertaken. According to various embodiments of the present disclosure, capsule 100 may be a replaceable item that can be replaced during servicing of a battery cell or unit.

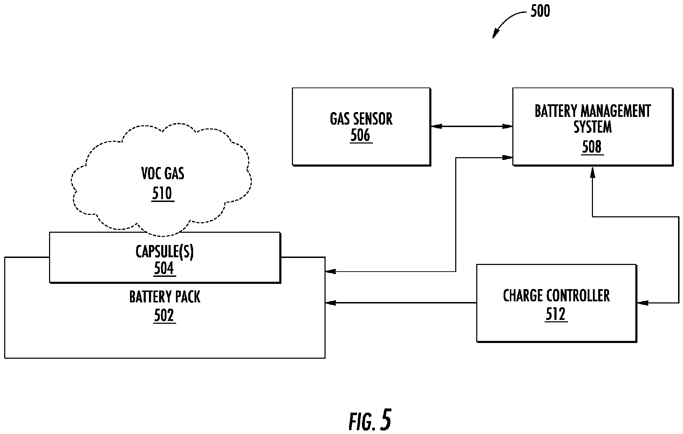

FIG. 5 presents an exemplary battery system incorporating thermal runaway detection according to an embodiment of the present disclosure. Battery system 500 comprises battery pack 502, capsule(s) 504, gas sensor 506, battery management system 508, and charge controller 512. Battery pack 502 may comprise a plurality of battery cells configured in series, parallel, or a combination thereof to deliver a desired voltage, capacity, or power density. Each of one or more of the plurality of battery cells may be configured with capsule(s) 504 such that heat from the one or more battery cells of the battery pack 502 may be conducted to the capsule(s) 504.

Capsule(s) 504 may comprise a capsule shell stored with VOC therewith, as disclosed according to various embodiments of the present disclosure. If sufficient heat is conducted to capsule(s) 504 from the one or more battery cells of the battery pack 502, e.g., a temperature that causes VOC within capsule(s) 504 to reach boiling point, VOC gas 510 (resulting from vaporization of the VOC) may be released from capsule(s) 504. The gas sensor 506 may comprise a sensor capable of detecting battery off-gassing. VOC gas 510 may comprise a compound vapor associated with battery off-gassing.

Accordingly, system 500 may provide for early detection of thermal runaway by monitoring for a condition where battery cells within battery pack 502 reach a certain temperature that is enough to open capsule(s) 504 rather than the battery cells themselves, such that permanent damage to the battery cells can be prevented. When capsule(s) 504 releases VOC gas 510, gas sensor 506 may detect the VOC gas 510 and transmit a data signal including an event, e.g., detection of VOC gas 510, to battery management system 508. Battery management system 508 may perform appropriate functions to prevent further increase in temperature and damage to battery pack 502 based on the data signal from gas sensor 506.

Battery management system 508 may comprise a computing device or processor configured to protect and ensure safe operation of battery pack 502. For example, battery management system 508 may monitor battery cells, provide protection to the battery cells, optimize performance of the battery cells, and report operational status of the battery cells to a device control unit. According to one embodiment, battery management system 508 may monitor or receive data signals from gas sensor 506. As such, battery management system 508 may be configured to determine early-stage thermal runaway based on data signals representative of a detection of VOC gas 510 by gas sensor 506. The battery management system 508 may monitor the status of battery pack 502 (e.g., including the detection of VOC gas 510) and communicate with charge controller 512 to manage charging parameters of battery pack 502 based on the monitoring. Charge controller 512 may comprise a computing device or processor configured to provide charging of battery pack 502 at given currents and voltages. As disclosed herewith, a processor may comprise programmable logic devices, microprocessors, multi-core processors, coprocessing entities, application-specific instruction-set processors (ASIPs), microcontrollers, and/or controllers.

It is to be understood that the disclosure is not to be limited to the specific embodiments disclosed, and that modifications and other embodiments are intended to be included within the scope of the appended claims. Although specific terms are employed herein, they are used in a generic and descriptive sense only and not for purposes of limitation, unless described otherwise.

## Claims

1. A thermally reactive capsule coupled to a battery cell, the thermally reactive capsule comprising:
a capsule shell comprising a thermally conductive material that transfers heat from a surface of the battery cell to the capsule shell;
a volatile organic compound ("VOC") stored within a cavity of the capsule shell, the VOC in a liquid state and at a temperature below boiling point of the VOC, wherein the boiling point of the VOC is below a threshold temperature; and
one or more pressure relief devices configured on a surface of the capsule shell, wherein pressure generated by vaporization of the VOC causes opening of the one or more pressure relief devices.

2. The thermally reactive capsule of claim 1, wherein the vaporization is caused by a transfer of heat from the surface of the battery cell to the capsule shell, the heat causing the VOC to reach or exceed the boiling point of the VOC.

3. The thermally reactive capsule of claim 1, wherein the capsule shell is adhered to the surface of the battery cell with thermally conductive adhesive.

4. The thermally reactive capsule of claim 1, wherein the boiling point of the VOC is within a range of approximately 50°C to 100°C.

5. The thermally reactive capsule of claim 1, wherein opening of the one or more pressure relief devices comprises releasing of VOC gas associated with the vaporization of the VOC.

6. The thermally reactive capsule of claim 1, wherein the threshold temperature comprises a temperature below a temperature associated with a risk of damage to the battery cell.

7. A system for detecting thermal runaway in batteries, the system comprising:
one or more thermally reactive capsules coupled to one or more battery cells, each of the one or more thermally reactive capsules comprising:
a capsule shell comprising a thermally conductive material that transfers heat from a surface of a selected one of the one or more battery cells to the capsule shell,
a volatile organic compound ("VOC") stored within a cavity of the capsule shell, the VOC in a liquid state and at a temperature below boiling point of the VOC, wherein the boiling point of the VOC is below a threshold temperature, and
one or more pressure relief devices configured on a surface of the capsule shell, wherein pressure generated by vaporization of the VOC causes opening of the one or more pressure relief devices; and
a gas sensor configured to detect the vaporization of the VOC.

8. The system of claim 7, wherein the vaporization is caused by a transfer of heat from the surface of the battery cell to the capsule shell, the heat causing the VOC to reach or exceed the boiling point of the VOC.

9. The system of claim 7, wherein the boiling point of the VOC is within a range of approximately 50°C to 100°C.

10. The system of claim 7, wherein opening of the one or more pressure relief devices comprises releasing of VOC gas associated with the vaporization of the VOC.

11. The system of claim 7, wherein the threshold temperature comprises a temperature below a temperature associated with a risk of damage to the battery cell.

12. A system comprising:
one or more thermally reactive capsules coupled to one or more battery cells of a battery pack, each of the one or more thermally reactive capsules comprising:
a capsule shell comprising a thermally conductive material that transfers heat from a surface of a selected one of the one or more battery cells to the capsule shell,
a volatile organic compound ("VOC") stored within a cavity of the capsule shell, the VOC in a liquid state and at a temperature below boiling point of the VOC, wherein the boiling point of the VOC is below a threshold temperature, and
one or more pressure relief devices configured on a surface of the capsule shell, wherein pressure generated by vaporization of the VOC causes opening of the one or more pressure relief devices; and
a gas sensor coupled to a battery management system, the gas sensor configured to:
detect VOC gas from the vaporization of the VOC, and
transmit a data signal to the battery management system, the data signal representative of the detection of the VOC gas.

13. The system of claim 12, wherein the battery management system is configured to determine thermal runaway based at least in part on the data signal.

14. The system of claim 12, wherein the battery management system is configured to communicate with a charge controller to manage charging parameters of the battery pack based at least in part on the data signal.

15. The system of claim 12, wherein the vaporization is caused by a transfer of heat from the surface of the battery cell to the capsule shell, the heat causing the VOC to reach or exceed the boiling point of the VOC.
